# EUROPEAN PATENT APPLICATION

(11) **EP 4 814 922 A1**
(43) Date of publication of application: **30.09.2026**
(21) Application number: 26167321.4
(22) Date of filing: 24.03.2026
(51) Int. Cl.: G08G 1/16, G06N 3/08

(54) **TRAJECTORY PREDICTION**

(30) Priority: 28.03.2025 IT 202500006504
(71) Applicant: Vodafone Automotive S.p.A., 21100 Varese (VA) (IT)
(72) Inventor: TUSCANO, Andrea, London, W2 6BY (GB); PEDOL, Mario, London, W2 6BY (GB); SOLINAS, Alessandro, London, W2 6BY (GB); PERNIGOTTO, Manuel, London, W2 6BY (GB)
(74) Representative: Boult Wade Tennant LLP

(57) **Abstract**

Methods and systems for predicting a trajectory of an object. A first trajectory time series is received representing a first trajectory of the object. A first path of a map graph is determined in closest proximity to the first trajectory. An acceleration of the object during a second trajectory of the object is predicted wherein the second trajectory comprises a predicted trajectory of the object subsequent to the first trajectory. It is determined whether the object is predicted to reach a junction node of the map graph during the second trajectory. If the object is predicted to reach a junction node during the second trajectory, a second path of the map graph on which the second trajectory will continue beyond the junction node is predicted. A second trajectory time series representing predicted geographic positions of the object during the second trajectory of the object is determined.

## Description

### TECHNICAL FIELD

The present disclosure relates to methods and systems for predicting a trajectory of an object. The method and systems disclosed herein may find particular, but not exclusive, application in the prediction of a trajectory of a vehicle.

### BACKGROUND

The ability to predict a trajectory of an object has applications across a wide range fields. For example, trajectory prediction may have applications in areas such as autonomous vehicles and intelligent transportation systems.

The field of predicting future trajectories of objects involves the development of models and algorithms to foresee the paths of moving entities based on current and historical data. This can be critical for enhancing the decision-making capabilities of autonomous vehicles, driver assistance systems, and intelligent transportation systems.

**In** the context of autonomous vehicles, trajectory prediction enables the system to anticipate the movement of vehicles, pedestrians, and other objects within its environment. This foresight can be used for collision avoidance, optimising route planning, and ensuring safe interactions with other traffic participants. Advanced machine learning techniques, such as deep learning and recurrent neural networks, may be employed to achieve high accuracy in these predictions.

Driver assistance systems may utilise trajectory prediction to augment human drivers' situational awareness and reaction times. By predicting potential hazards and the likely movements of surrounding traffic, these systems can provide timely alerts or autonomously take preemptive actions to prevent accidents.

Intelligent transportation systems may leverage trajectory predictions to improve traffic flow and manage congestion in urban environments. By understanding the trajectory patterns of numerous vehicles, these systems can optimize signal timings, reroute traffic dynamically, and enhance the overall efficiency of transportation networks.

Trajectory prediction can therefore be a pivotal element in the advancement of modern vehicular technologies, contributing to safer and more efficient transportation solutions.

**It** is in this context the present disclosure has been devised.

### SUMMARY

Trajectory prediction models are typically configured to predict or forecast a future trajectory of an object based on a historical trajectory of the object (e.g., a trajectory undergone by the object immediately prior to predicting the future trajectory of the object). Trajectory prediction models may be trained using machine learning methods. For example, supervised training may be performed based on a training data set comprising a plurality of previously recorded trajectories. For example, a trajectory prediction model may be trained to predict the future trajectory of a vehicle, such as a car, based on a historical trajectory of the vehicle. Such a trajectory prediction model may be trained using supervised learning based on a training data set comprising a plurality of observed trajectories of vehicles. Such observed trajectories of vehicles may be collected through observation (e.g., measurement) of the position of one or more vehicles, for example, when the vehicles are undergoing a number of different journeys.

The prediction of a future trajectory of an object (e.g., vehicle) can be highly complex and difficult to model, with many degrees of freedom. Existing approaches to trajectory prediction may rely on complicated and computationally expensive modelling approaches and/or rely on extensive historical data or complex sensor arrays. This may limit their applicability to many real-world scenarios and limit their useful application.

Methods and systems are described herein which can accurately predict trajectories of objects in a computationally efficient way and based on limited and widely available input data. In particular, methods are disclosed which utilise a map graph representing paths which can be traversed by an object. For example, a map graph may represent roads along which a vehicle can travel. Such map graphs are widely available and cane be used to provide local information over a wide variety of different locations (e.g., across the globe).

A modelling approach may be taken in which object trajectories are constrained to paths included in a map graph. Such a modelling approach may significantly simplify the prediction of object trajectories and may allow trajectories to be accurately without the need for complex and extensive inputs, such as those collected from complicated sensor arrays and/or networks. In particular, a simple representation of the position of an object in a time period leading up to a predicted trajectory (e.g., in the form of commonly used and collected GPS coordinates) may, along with a map graph, be used as inputs to predict a future trajectory of the object. Furthermore, the use of a map graph to inform the prediction of a trajectory allows the methods and systems disclosed herein to be adapt to and provide accurate predictions across a wide variety of different locations and environments, even if a prediction model has not been trained on data representing that location and/or environment.

According to methods and systems disclosed herein, an acceleration of an object is predicted independent of a prediction of the direction of motion of the object. This provides a simplified modelling approach which increases prediction accuracy and computational efficiency.

The methods and systems described herein may allow real-time trajectory prediction to be performed by relatively resource constrained devices and may not require connection to a wide area network (e.g, the internet). For example, methods and systems described herein may be implemented by in-vehicle computing devices and/or mobile devices such as smartphones. Trajectory prediction may be performed using simple location data which may be routinely collected by such devices and map graph data which may be locally stored or otherwise readily accessible from such devices.

According to a first aspect of the present disclosure there is provided a computer implemented method of predicting a trajectory of an object. The method comprises: receiving a first trajectory time series comprising a time series of geographic locations representing the geographic position of an object during a first trajectory of the object; determining a first path of a map graph which is in closest proximity to at least one geographic location in the first trajectory time series, wherein the map graph comprises a plurality of paths extending between junction nodes on which at least three paths are incident; predicting, in dependence on the first trajectory time series, an acceleration of the object between a plurality of times during a second trajectory of the object, wherein the second trajectory comprises a predicted trajectory of the object subsequent to and continuing from the first trajectory; determining, if the object travels along the first path of the map graph and with the predicted acceleration of the object during the second trajectory, whether the object is predicted to reach a junction node of the map graph during the second trajectory; if the object is predicted to reach a junction node during the second trajectory, predicting, in dependence on the first trajectory time series, a second path of the map graph on which the second trajectory will continue beyond the junction node; and determining a second trajectory time series comprising a time series of geographic locations representing predicted geographic positions of the object during the second trajectory of the object. The second trajectory time series is determined in dependence on the predicted acceleration of the object during the second trajectory and comprises: geographic locations on the first path of the map graph if the object is not predicted to reach a junction node during the second trajectory; and geographic locations on one or both of the first path and the second path of the map graph, if the object is predicted to reach a junction node during the second trajectory.

The method may comprise determining, in dependence on the first trajectory time series and the first path of the map graph a direction of travel of the object along the first path during the first trajectory.

The method may comprise: predicting a distance of the object from a start of the second trajectory at each of the plurality of times during the second trajectory; and determining a geographic location on the first path or the second path for each of the predicted distances from the start of the second trajectory.

The distances may be determined in dependence on the predicted acceleration of the object for the plurality of times during the second trajectory.

The method may comprise: determining, for each geographic location in the trajectory time series, a closest path of the map graph which is in closest proximity to the geographic location in the trajectory time series; and projecting each geographic location in the trajectory time series onto a position on the determined closest path of the map graph.

Predicting the acceleration of the object between a plurality of times during the second trajectory of the object may comprise: implementing an acceleration prediction model, wherein the acceleration prediction model is configured through training to predict an acceleration of an object for at least one time period during a future trajectory of the object based on model inputs representative of a past trajectory of the object, wherein the future trajectory comprises a predicted trajectory of the object subsequent to and continuing from the past trajectory of the object, and wherein implementing the acceleration prediction model comprises providing model inputs representative of the first trajectory of the object to the acceleration prediction model.

The implementing an acceleration prediction model may comprise implementing an acceleration prediction model a plurality of times to predict an acceleration of the object for a plurality of times during the second trajectory.

Implementing an acceleration prediction model a plurality of times may comprise: a first implementation of an acceleration prediction model comprising providing model inputs representative of the first trajectory of the object to the acceleration prediction model and obtaining a prediction of an acceleration of the object at a first time during the second trajectory; and a second implementation of an acceleration prediction model comprising providing model inputs representative of the first trajectory of the object and a model input representative of the obtained prediction of the acceleration of the object at the first time during the second the acceleration prediction model, and obtaining a prediction of an acceleration of the object at a second time during the second trajectory.

Predicting the acceleration of the object between a plurality of times during the second trajectory of the object may comprise performing feature engineering to derive at least one engineered feature in dependence on the first trajectory time series and providing the at least one engineered feature as a model input to the acceleration prediction model.

The at least one engineered feature may comprise at least one of: a turn angle feature representative of a turn angle of the object during the first trajectory, a progressive distance feature representative of a distance of the object from a start of the first trajectory during the first trajectory, a speed ratio feature representative of a ratio of a speed of the object at a time during the first trajectory to an average speed of the object during the first trajectory, an acceleration feature representative of an acceleration of the object during the first trajectory, an angular speed feature representative of an angular speed of the object during the first trajectory, a direction feature representative of a direction of movement of the object during the first trajectory, an angular change feature representative of a change of direction of the object during the first trajectory, a positional difference feature representative of a difference in position of the object at different times during the first trajectory.

Determining whether the object is predicted to reach a junction node of the map graph during the second trajectory may comprise: determining, in dependence on the predicted acceleration of the object during the second trajectory, a predicted furthest distance of the object from a start of the second trajectory during the second trajectory; determining a distance from the start of the second trajectory to an end of the first path; and determining whether the predicted furthest distance from the start of the second trajectory is greater than the determined distance from the start of the second trajectory to the end of the first path.

Predicting a second path of the map graph on which the second trajectory will continue beyond the first path may comprise implementing a direction prediction model configured through training to predict a future direction of motion of an object based on model inputs representative of a past trajectory of the object and wherein implementing the direction prediction model comprises providing model inputs representative of the first trajectory of the object to the direction prediction mode.

The direction prediction model may comprise a classifier configured to predict a future direction of motion of an object from a discrete number of candidate directions.

The direction prediction model may comprise an ensemble of a plurality of base direction prediction models each configured to predict a future direction of motion of an object based on model inputs representative of a past trajectory of the object. Implementing the direction prediction model may comprise: providing model inputs representative of the first trajectory of the object to each of the base direction prediction models to obtain a plurality of direction predictions of a future direction of motion of the object; and determining a future direction of motion of the object based on the plurality of direction predictions.

The plurality of direction predictions obtained from the base direction prediction models may each comprise a plurality of probabilities associated with a plurality of candidate directions.

The predicting a second path of the map graph on which the second trajectory will continue beyond the first path may comprise determining a path of the map graph which is most closely aligned with a future direction of motion of the object obtained from the direction prediction model.

The predicting a second path of the map graph on which the second trajectory will continue beyond the junction node may comprise performing feature engineering to derive at least one engineered feature in dependence on the first trajectory time series and providing the at least one engineered feature as a model input to the direction prediction model.

The at least one engineered feature may comprise at least one of: a speed feature representative of a speed of the object during the first trajectory, a turn angle feature representative of a turn angle of the object during the first trajectory, and a positional difference feature representative of a difference in position of the object at different times during the first trajectory.

According to a second aspect of the present disclosure there is provided a computer readable medium storing instructions, which when executed, cause a method according to the first aspect to be implemented.

The computer readable medium may comprise a non-transitory computer readable medium.

The instructions may be implemented by any suitable computing device and/or system. For example, the instructions may be implemented by one or more processors.

According to a third aspect of the present disclosure there is provided a trajectory prediction system. The trajectory prediction system is configured to: receive a first trajectory time series comprising a time series of geographic locations representing the geographic position of an object during a first trajectory of the object; determine a first path of a map graph which is in closest proximity to at least one geographic location in the first trajectory time series, wherein the map graph comprises a plurality of paths extending between junction nodes on which at least three paths are incident; predict, in dependence on the first trajectory time series, an acceleration of the object between a plurality of times during a second trajectory of the object, wherein the second trajectory comprises a predicted trajectory of the object subsequent to and continuing from the first trajectory; determine, if the object travels along the first path of the map graph and with the predicted acceleration of the object during the second trajectory, whether the object is predicted to reach a junction node of the map graph during the second trajectory; if the object is predicted to reach a junction node during the second trajectory, predict, in dependence on the first trajectory time series, a second path of the map graph on which the second trajectory will continue beyond the junction node; and determine a second trajectory time series comprising a time series of geographic locations representing predicted geographic positions of the object during the second trajectory of the object. The second trajectory time series is determined in dependence on the predicted acceleration of the object during the second trajectory and comprises: geographic locations on the first path of the map graph if the object is not predicted to reach a junction node during the second trajectory; and geographic locations on one or both of the first path and the second path of the map graph, if the object is predicted to reach a junction node during the second trajectory.

The trajectory prediction system may comprise one or more computing devices and/or systems. For example, the trajectory prediction system may comprise at least one memory and at least one processor. The at least one memory may store instructions which may be executed by the at least one processor to carry out the steps which the trajectory prediction system is configured to perform.

The trajectory prediction system may be configured to perform any of the steps and/or features described above with reference to the first aspect.

**It** will be appreciated from the foregoing disclosure and the following detailed description of the examples that certain features and implementations described as being optional in relation to any given aspect of the disclosure set out above should be understood by the reader as being disclosed also in combination with the other aspects of the present disclosure, where applicable. Similarly, it will be appreciated that any attendant advantages described in relation to any given aspect of the disclosure set out above should be understood by the reader as being disclosed as advantages of the other aspects of the present disclosure, where applicable. That is, the description of optional features and advantages in relation to a specific aspect of the disclosure above is not limiting, and it should be understood that the disclosures of these optional features and advantages are intended to relate to all aspects of the disclosure in combination, where such combination is applicable.

### BRIEF DESCRIPTION OF THE DRAWINGS

Certain examples of the present disclosure will now be described, with reference to the accompanying drawings, in which:
- FIG. 1 is a schematic illustration of an example trajectory of an object;
- FIG. 2 is a schematic illustration of an example first trajectory and second trajectory, subsequent to and continuing from the first trajectory;
- FIG. 3 is a schematic illustration of an example trajectory prediction system;
- FIG. 4 is a flowchart of an example method of predicting a trajectory of an object;
- FIG. 5 is a schematic illustration of an example map graph;
- FIG. 6 is a schematic illustration of an example map graph and a first trajectory relative to the map graph; and
- FIG. 7 is a schematic illustration of an example electronic device which may be used to implement all or part of any method and/or system described herein.

### DETAILED DESCRIPTION

Hereinafter, examples of the disclosure are described with reference to the accompanying drawings. However, it should be appreciated that the disclosure is not limited to the described examples, and all changes and/or equivalents or replacements thereto also belong to the scope of the disclosure. The same or similar reference denotations may be used to refer to the same or similar elements throughout the specification and the drawings.

As used herein, the terms "have," "may have," "include," or "may include" a feature (e.g., a number, function, operation, or a component such as a part) indicate the existence of the feature and do not exclude the existence of other features. Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

As used herein, the terms "A or B," "at least one of A and/or B," or "one or more of A and/or B" may include all possible combinations of A and B. For example, "A or B," "at least one of A and B," "at least one of A or B" may indicate all of (1) including at least one A, (2) including at least one B, or (3) including at least one A and at least one B.

As used herein, the terms "first" and "second" may modify various components regardless of importance and do not limit the components. These terms are only used to distinguish one component from another. For example, reference to a first component and a second component may indicate different components from each other regardless of the order or importance of the components.

It will be understood that when an element (e.g., a first element) is referred to as being (physically, operatively or communicatively) "coupled with/to," or "connected with/to" another element (e.g., a second element), it can be coupled or connected with/to the other element directly or via a third element. In contrast, it will be understood that when an element (e.g., a first element) is referred to as being "directly coupled with/to" or "directly connected with/to" another element (e.g., a second element), no other element (e.g., a third element) intervenes between the element and the other element.

The terms as used herein are provided merely to describe some embodiments thereof, but not to limit the scope of other embodiments of the disclosure. It is to be understood that the singular forms "a," "'an," and "the" include plural references unless the context clearly dictates otherwise. All terms including technical and scientific terms used herein have the same meaning as commonly understood by one of ordinary skill in the art to which the embodiments of the disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

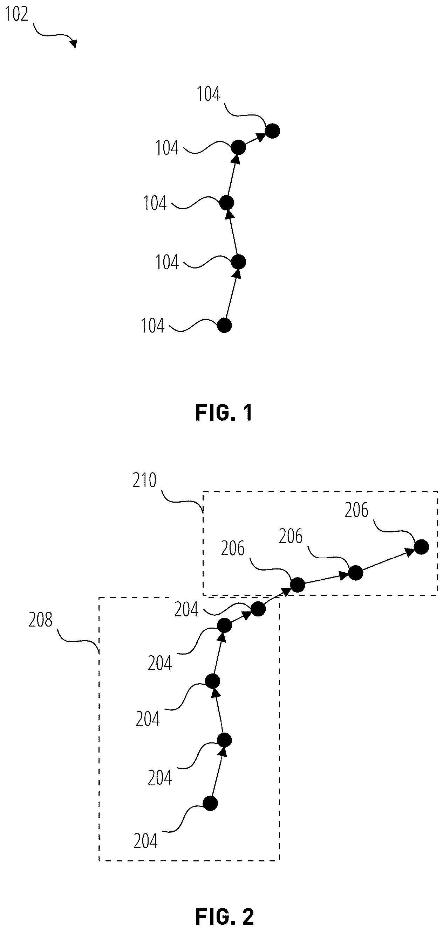

FIG. 1 is a schematic illustration of an example trajectory 102 of an object. The illustration of FIG. 1 represents a plurality of geographic locations 104 at which the object was situated at different times during the trajectory 102. The object may comprise any physical object which undergoes movement and thus is located at different geographic locations at different times. For example, the object may comprise a vehicle such as a land-vehicle (e.g., car, truck, bicycle, motorcycle etc.) a watercraft (e.g., boat, submarine etc.), an aircraft (e.g., aeroplane, helicopter, drone etc.), or spacecraft (e.g., rocket, satellite etc.). Such a vehicle may be controlled by a human operator (driver) and/or an autonomous driving system. In some examples, the object may comprise a living object such as a human (e.g., pedestrian) or animal.

The geographic locations 104 may comprise observed or measured geographic locations of an object. For example, one or more sensors may be arranged to measure the geographic location of the object and may measure a plurality of different locations 104 at which the object is situated at a plurality of different times. In some examples, one or more sensors may be attached to or form part of the object and may therefore undergo movement along with the object. Such one or more sensors may measure their own geographic location (for example, using a global positioning system) and thus the geographic location of the object. Additionally or alternatively, one or more sensors may be arranged to remotely determine the location of the object at different times. For example, one or more sensing devices such as a camera, radar sensor, lidar sensor etc., may be used to remotely determine the location of the object.

The different locations 104 shown in FIG. 1 represent different locations 104 at which the object is situated at different times during the trajectory 102. The arrows extending between locations 104 in FIG. 1 indicate the time order in which the object was situated at the locations 104. For example, the locations 104 which are adjacent to each other in time-order are joined by arrows in order to illustrate the sequence of locations 104 at which the object is situated during the trajectory 102. The directionality of the arrows indicate the time order of the locations at which the object is situated and the direction of movement of the object between the locations 104.

The trajectory 102 may be represented by a trajectory time series. A trajectory time series comprises a time series of geographic locations 104 representing the geographic position of the object during the trajectory 102 of the object. The time series of geographic locations 104 may comprise a time-ordered list of geographic locations 104 of the object. That is, the locations 104 at which the object is positioned may be ordered in the time-order in which the object was positioned at the respective locations 104. The geographic locations may be represented using any suitable co-ordinate system. For example, a geographic location 104 may be represented as a latitude and longitude of the object. In some examples, a geographic location 104 may be additionally represented in a third dimension such as an altitude of the object. In some examples, a trajectory time series may include one or more further variables associated with each entry (geographic position) in the time series. For example, a trajectory time series may include one or more variables such as a time-stamp associated with each geographic location in the time series and/or a speed at which the object is moving during the trajectory (e.g., a speed at which the object is moving when located at each geographic position in the time series). A trajectory time series may further include an identifier to identify the object (which may be referred to as an agent) with which the trajectory is associated. A trajectory time series may be supplemented with one or more additional features derived through feature engineering.

An example trajectory time series is represented in the table below. The example trajectory time series represented in the table below comprises four entries corresponding to four different geographic locations at which an object is located at four different times. Each entry is represented by four variables comprising a time stamp, a latitude, a longitude and a speed. The entries are ordered in sequence of their time stamp. The time stamps (T1-T4) represent a time at which the object was located at the geographic locations indicated by the latitude (Lat1-Lat4) and longitude (Lon1-Lon4) variables. The speeds (S1-S4) represent the speed at which the object was moving at respective times (T1-T4) and when positioned at the respective locations (Lat1-Lat4, Lon1-Lon4).

| **Time** | **Latitude** | **Longitude** | **Speed** |
|---|---|---|---|
| T1 | Lat1 | Lon1 | S1 |
| T2 | Lat2 | Lon2 | S2 |
| T3 | Lat3 | Lon3 | S3 |
| T4 | Lat4 | Lon4 | S4 |

It will be appreciated that the example trajectory time series represented in the table above is merely an illustrative example and many different variations are possible. For example, one or more alternative or additional variables may be used to represent a trajectory. In some examples, not all of the variables shown in the table above may be included in a time series representation of a trajectory. The number of entries in a trajectory time series may be different to the four entries shown in the table above. For example, a trajectory time series may include more than four entries (locations). In some examples, a trajectory time series may be represented in the form of one or more vectors and/or matrices as opposed to the tabular representation shown above.

Methods and apparatus are disclosed herein for predicting a future trajectory of an object based on a past trajectory of the object. For example, a future trajectory of a vehicle may be predicted based on an observed past trajectory of the vehicle. Such predictions may be utilised in a variety of different applications such as autonomous driving, traffic management and/or collision avoidance.

Taking the example, of FIG. 1 it may be desirable to predict a future trajectory of the object, which has undergone the trajectory 102 shown in FIG. 1. Such an example, is illustrated in FIG. 2 which is a schematic illustration of a first trajectory 208 and a second trajectory 210 of an object. The first trajectory 208, which is shown in FIG. 2 corresponds with the trajectory 102 of FIG. 1 and comprises a plurality of time ordered locations 204 (which correspond with the locations 104 shown in FIG. 1). For example, the locations 204 may all represent observed geographic locations of an object at different times. For this reason, the first trajectory 208 may be referred to as a past trajectory and the locations 204 forming the first trajectory 208 may be referred to as past locations 204. For example, at the time of predicting a future trajectory of an object, the first trajectory 208 may represent past locations 204 at which the object has been observed in the past.

Also shown in FIG. 2 is a second trajectory 210 of the same object. The second trajectory 210 also comprises a plurality of geographic locations 206 (which may, for example, be represented as a time series of geographic locations, as described above). The second trajectory 210 represents a prediction of a future trajectory of the object continuing from the first trajectory 208. That is, the second trajectory 210 comprises a predicted trajectory of the object subsequent to and continuing from the first trajectory 208. The second trajectory 210 may be determined by a trajectory prediction system as described in further detail below. Similarly to the first trajectory 208, the second trajectory 210 (which may comprise the output of a trajectory prediction system) also comprises a time series of geographic locations, which in FIG. 2 is represented by time-ordered future locations 206. Future locations 206 which are adjacent to each other in time-order are joined by arrows in order to illustrate the sequence of future locations 206 at which the object is predicted to be situated during the second trajectory 210. The directionality of the arrows indicate the time order of the future locations 206 in the second trajectory 210.

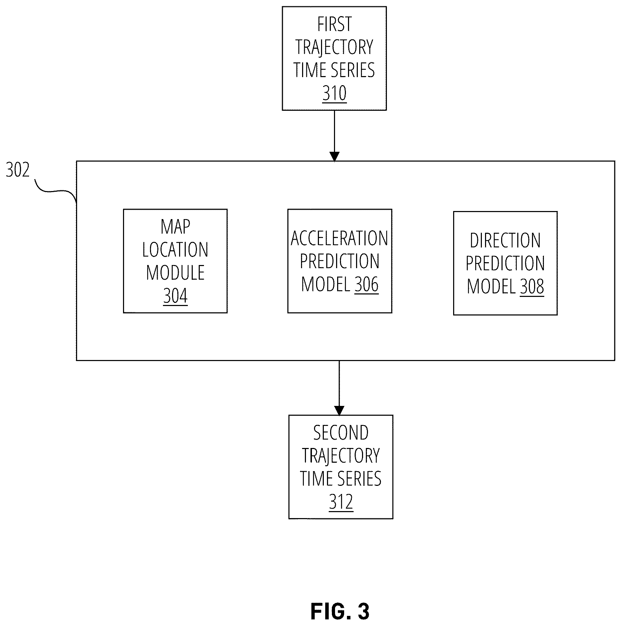

FIG. 3 is a schematic illustration of a trajectory prediction system 302. The trajectory prediction system 302 may be realised by any suitable computing system. A suitable computing system may comprise one or more electronic devices (which may be realised as computing devices).

The trajectory prediction system 302 comprises a map location module 304, an acceleration prediction model 306 and a direction prediction model 308. The map location module 304, acceleration prediction model 306 and direction prediction model 308 may be realised as any suitable computing device or combination of computing devices. The map location module 304, acceleration prediction model 306 and direction prediction model 308 are intended to refer to different functionality only and it is not intended to imply a separation of the hardware used to implement the functionality (although in at least one example separate hardware may be used to implement the different modules and/or models).

The trajectory prediction system 302 is arranged to receive a first trajectory time series 310 and output a second trajectory time series 312. As will be described in further detail below, the first trajectory time series 310 is representative of an observed trajectory of an object (e.g., the first trajectory 208 shown in FIG. 2). For example, the first trajectory time series 310 may be obtained through measurement of the position of an object during a first trajectory. The first trajectory time series 310 may be considered to be representative of a past trajectory of an object, since it is representative of a trajectory of the object which has already occurred when the first trajectory time series 310 is provided to the trajectory prediction system 302.

The second trajectory time series 312 is representative of a predicted future trajectory of the object (e.g., the second trajectory 210 shown in FIG. 2). The predicted future trajectory of the object (which is represented by the second trajectory time series 312) is a trajectory subsequent to and continuing from the past trajectory of the object (which is represented by the first trajectory time series 310). The second trajectory time series 312 is determined by the trajectory prediction system 302, based on the first trajectory time series 310.

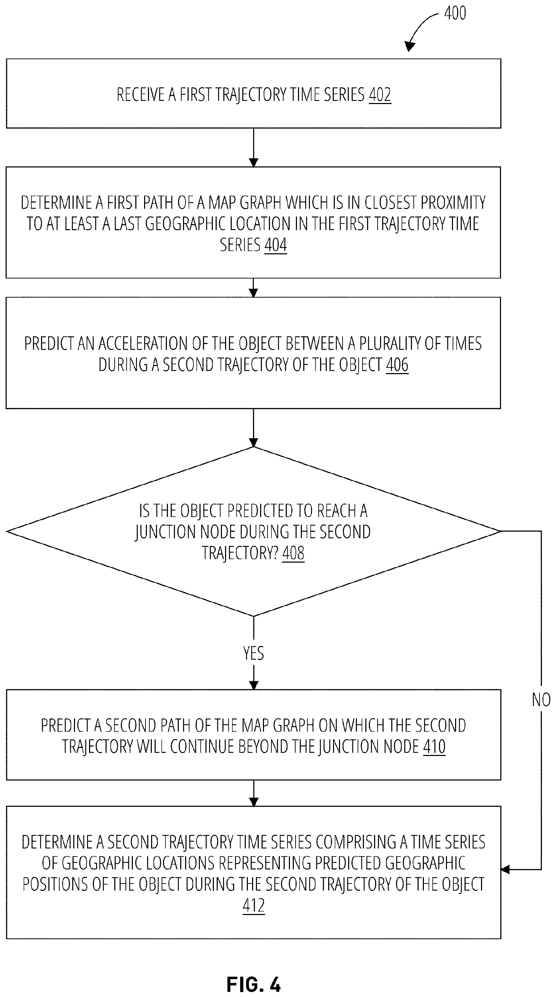

A more detailed description of the prediction of a future trajectory of an object (the second trajectory time series 312) will be provided below with reference to FIG. 4.

FIG. 4 is a flowchart of a method 400 of predicting a trajectory of an object. The method 400 may be implemented using one or more computing devices (and may thus be a computer implemented method 400). For example, the method 400 of FIG. 4 may be implemented by a trajectory prediction system 302 as shown in FIG. 3.

At step 402 a first trajectory time series 310 is received. As described above, the first trajectory time series 310 is representative of a first trajectory (past trajectory) of an object. The first trajectory time series comprises a time series of geographic locations representing the geographic position of an object during the first trajectory of the object. The trajectory time series may include any of the features described herein with respect to trajectory time series.

The first trajectory time series 310 may be considered to comprise a geographic location of the object at a latest time *T* in the first trajectory. The geographic location of the object may be denoted by way of two coordinates *xₜ, yₜ* (e.g., latitude and longitude), where the subfix *t* is an index which denotes the time at which the object was located at the location *xₜ, yₜ.* The first trajectory time series 310 may further comprise a velocity of the object *vₜ* at a time denoted by the index *t.* The time *T* may be the last time (the latest time) at which the location *xₜ, yₜ* and velocity vₜ of the object has been observed. The first trajectory time series 310 further comprises corresponding locations of the object for n time points preceding the time *T.* For example, the first trajectory time series 310 may comprises set of locations (*x_{T}, y_{T}*), (*x_{T-l}, y_{T-l}*), *...,* (*x_{T-n}, y_{T-n}*). In at least some examples, the first trajectory time series 310 may further comprise a velocity v of the object for each time point. For example, the first trajectory time series 310 may be represented as (*x_{T}, y_{T}, v_{T}*)*,* (*x_{T-1}, y_{T-l}, v_{T-l}*), *...,* (*x_{T-n}, y_{T-n}, v_{T- n}*). The number *n* of previous time points included in the first trajectory time series 310 may be any suitable number and may depend on the sampling frequency (the time difference between consecutive times in the time series). In some examples, the number *n* of previous time points included in the first trajectory time series 310 may be of the order of approximately 10.

At step 404 a first path of a map graph is determined. The first path is a path in the map graph which is in closest proximity to at least one geographic location in the first trajectory time series. Step 404 may be performed by the map location module 304. The map graph comprises a plurality of paths extending between junction nodes, where junction nodes comprise nodes of the map graph on which at least three paths are incident.

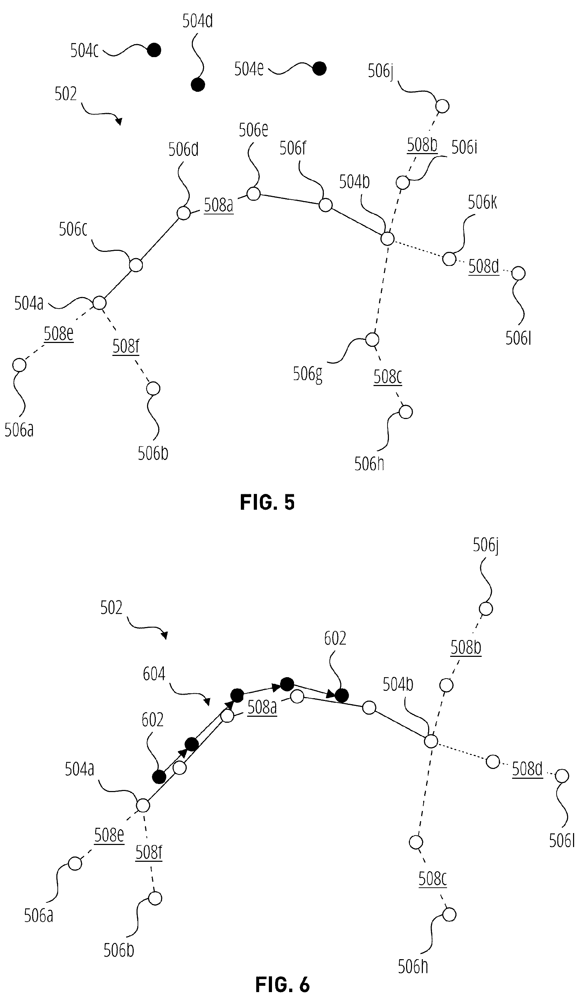

FIG. 5 is a schematic illustration of an example section of a map graph 502. A map graph 502 may be used to represent paths which can be traversed by an object. For example, a map graph 502 may represent roads, tracks, pathways etc., which may be traversed by an object, such as a vehicle or pedestrian. The term "way" is used herein to describe possible paths, or routes etc., that an object can traverse in a trajectory and which may be represented on a map. For example, a way may comprise a road, a track, a cycleway, a pathway, a bridlepath, a byway, a waterway or any other path or route which can be traversed by an object such as a vehicle or pedestrian. The map graph 502 shown in FIG. 5 may, for example, be considered to represent sections of roads along which a vehicle may travel.

The map graph 502 comprises a plurality of nodes 504a, 504b, 506a - 506n, and a plurality of edges, each node extending between two edges. The nodes 504a, 504b, 506a - 5061 are represented by white circles in FIG. 5 and include junction nodes 504a, 504b and shape nodes 506a - 5061. The edges are represented by solid, dashed and dotted lines extending between nodes in FIG. 5. The edges represent possible paths which an object can traverse between nodes. In some examples, nodes and edges may be arranged so to replicate the arrangement of sections of ways. For example, nodes and edges may be arranged such that each edge falls within the boundaries of a way along which an object (such as a vehicle) can travel. The nodes and edges may be arranged such that each edge approximates a centre line of a way (such as a road, track or pathway) along which an object (such as a vehicle) can travel. As will be described in further detail below, trajectories of objects may be considered and/or predicted to be constrained to movement along edges of a map graph, such as the map graph 502 shown in FIG. 5.

The junction nodes 504a, 504b comprise nodes on which at least three edges are incident. For example, the junction node 504a shown in FIG. 5 has three edges incident on it (an edge between the shape node 506a and the junction node 504a, an edge between the shape node 506b and the junction node 504a, and an edge between the shape node 506c and the junction node 504a). The junction node 504b shown in FIG. 5 has four edges incident on it (an edge between the shape node 506f and the junction node 504b, an edge between the shape node 506i and the junction node 504b, an edge between the shape node 506g and the junction node 504b, and an edge between the shape node 506k and the junction node 504b).

Junction nodes 504a, 504b may be used to represent junctions in a map graph 502. A junction may, for example, comprise a point at which a plurality of roads, tracks, or pathways etc., meet. An object travelling along an edge and incident on a junction node 504a, 504b has a choice of a plurality of edges (other than the edge along which it arrived) extending from the junction node 504a, 504b at which it arrives and along which it can continue its trajectory. For example, an object travelling along the edge extending between the shape node 506a and the junction node 504a and arriving at the junction node 504a may continue its trajectory along the edge extending from the junction node 504a to the shape node 506c, or along the edge extending from the junction node 504a to the shape node 506b.

The shape nodes 506a - 5061 comprise nodes which have no more than two edges incident on them. For example, the shape node 506c has two edges incident on it (an edge between the junction node 504a and the shape node 506c and an edge between the shape node 506d and the shape node 506c).

Shape nodes 506a - 5061 may be used to represent a shape of way. For example, shape nodes 506a - 5061 may be used to represent non-linear portions of a road, track or path etc. (e.g., bends). An object travelling along an edge and incident on a shape node 506a has only a single edge (other than the edge along which it arrived) extending from the shape node at which it arrives and along which it can continue its trajectory. For example, an object travelling along the edge extending between the junction node 504a and the shape node 506c and arriving at the shape node 506c may only continue its trajectory (without reversing its direction) along the edge extending from the shape node 506c to the shape node 506d.

Edges of a map graph 502 may be considered to form one or more paths. The term path is used herein to describe one or more connected edges which terminate at a junction node (that is, the path terminates or ends at a junction node). A path may extend between two junction nodes and terminate or end at both junction nodes (at either end of the path). For example, in the map graph 502 of FIG. 5, a first path 508a comprises the connected edges depicted with solid lines which extend between the junction node 504a and the junction node 504b. A second path 508b comprises the connected edges depicted with dashed lines which extend between the junction node 504b and the shape node 506j. A third path 508c comprises the connected edges depicted with dashed lines which extend between the junction node 504b and the shape node 506h. A fourth path 508d comprises the connected edges depicted with dotted lines which extend between the junction node 504b and the shape node 5061. A fifth path 508e comprises the connected edges depicted with dashed lines which extend between the junction node 504a and the shape node 506a. A sixth path 508f comprises the connected edges depicted with dashed lines which extend between the junction node 504a and the shape node 506b. The second path 508b, third path 508c, fourth path 508d, fifth path 508e and/or sixth path 508f may extend beyond the respective shape nodes 506j, 506h, 5061, 506a, 506b to one or more other nodes (e.g., terminating at a junction node) not shown in FIG. 5.

A path (e.g., the first path 508a) comprises a path along which an object may travel during which it does not reach any junctions until the end of the path at a junction node. That is, an object travelling along a path (e.g., the first path 508a) does not have a choice or option of edges along which to continue its trajectory (without reversing its direction) until it reaches the end of the path at a junction node 504a, 504b. A path may be considered to be represented by a polyline. For example, the connected edges forming the first path 508a may be considered to form a polyline extending between the junction node 504a and the junction node 504b.

The example map graph 502 of FIG. 5 may comprise a section of a larger map graph. Map graphs may, for example, be used to represent ways over a relatively large geographic area such as a town, city, county, state, country, continent, or the entire globe. One example of a publicly available map graph is OpenStreetMap [1], however, other forms of map graph may be used. Not all map graphs may be represented in precisely the same way and their representation may differ from the representation described above with reference to FIG. 5. Map graphs as contemplated herein may generally be considered to comprise a plurality of paths (which may be represented by one or more edges, which may extend between one or more shape nodes), extending between a plurality of junction nodes. Paths may not include any junction nodes other than at their ends. That is, an object travelling along a path does not pass through any junctions at which there is a choice of directions to travel (without reversing its direction) until it reaches the end of the path (at which there may be a junction node).

Determining a first path of a map graph which is in closest proximity to at least one geographic location in the first trajectory time series in step 404, may comprise determining a section of map graph in which the first trajectory is located. For example, to simplify and/or to improve the efficiency of subsequent processing, a section of a larger map graph in which the first trajectory is located may be determined. A larger map graph such as a map graph covering an entire country, state, county, city etc., may be loaded into memory and a section of the larger map graph determined for subsequent processing. For example, a location in the first trajectory time series 310 may be selected (e.g., a first location or last location in the first trajectory time series 310) and a section of a larger map graph determined which is centred on the selected location. Subsequent processing as described further below, may then be limited to the determined section of the map graph to simplify the processing and/or to improve processing efficiency.

As was described above, a first path is determined which is in closest proximity to at least one geographic location in the first trajectory time series 310. The at least one geographic location in the first trajectory time series 310 may comprise at least a last geographic location in the first trajectory time series 310. A last geographic location in the first trajectory time series 310 may comprise a last geographic location in time order. That is, a last geographic location in the first trajectory time series 310 may comprise the last location (in time) at which the object was situated during the first trajectory. In some examples, a nearest path in the map graph may be determined for each location in the first trajectory time series 310.

FIG. 6 is a schematic illustration of the same section of map graph 502 which is shown in FIG. 5. The map graph 502 shown in FIG. 6 includes the same, nodes, edges and paths described with reference to FIG. 5 and no detailed explanation will be provided again with reference to FIG. 6. Also shown in FIG. 6 is a first trajectory 604 represented by a plurality of time-ordered locations 602 (only the first and last of which are labelled for ease of illustration). The first trajectory 604 is represented by a plurality of locations 602 shown with black circles and which correspond to locations 602 at which an object was situated at different times during a trajectory of the object. The time order of the locations 602 and the direction of travel of the object during the trajectory is indicated by arrows extending between the locations 602. The directionality of the arrows indicates the direction in which the object travelled between the locations 602. The first trajectory 604 may, for example, corresponds with measured locations 602 of an object during the trajectory of the object. The first trajectory 604 may be represented by a trajectory time series.

As can be seen in FIG. 6, locations 602 in the first trajectory 604 are proximate to edges which form the first path 508a of the map graph 502. The proximity of the locations 602 to edges of the first path 508a may be taken to indicate that the object has travelled along a way, which is represented by in the map graph 502 by the first path 508a. Even when an object travels along a way which is represented by a path in a map graph, there may still be differences in position between the measured locations of the object and the path. This can be seen in FIG. 6 in which the locations 602 in the first trajectory 604 do not lie exactly on the edges which form the first path 508a. Such discrepancies between object locations 602 may be attributed to a number of factors such as uncertainties in the determination of location of the object, and/or differences between an edge of a map graph and the boundaries of a way (such as a road, track, pathway etc.), along which an object can move.

In methods described herein, it has been found that the prediction of a trajectory of an object can be significantly simplified by applying an assumption that the movement of an object will be constrained to ways (e.g., roads, tracks, pathways etc.), which are represented by a path in a map graph. For example, it may be assumed that the first trajectory 604 is a trajectory along a way represented by the first path 508a of the map graph 502.

As explained above, the map location module 304 determines a path of a map graph which is in closest proximity to at least one geographic location in a first trajectory time series. For example, a closest edge in the map graph to one or more locations in a first trajectory time series may be determined and a path to which the closest edge belongs may be determined to determine the path. A closest path of a map graph may be determined for at least a last geographic location in a trajectory time series. This may, for example, indicate a path on which the object is travelling at the end of the first trajectory and may be used to predict one or more paths along which the object may travel during a second (future) trajectory.

In at least some examples, a closest path of a map graph may be determined for each location in a trajectory time series. For example, with reference to the example shown in FIG. 6, for each of the locations 602 in the first trajectory 604, a path of the map graph 502 which is in closest proximity to the location 602 may be determined. As described above, a section of a larger map graph in which the first trajectory 604 is located may be determined. The determined section may, for example, be loaded into memory to aide subsequent processing. For each location 602 in the first trajectory 604 it may first be determined whether the location 602 is contained within the section of the map graph 502 which is currently loaded in memory. If the location 602 is not contained within the section of the map graph 502, which is currently loaded in memory then a new section of the map graph 502 may be determined (for example, a section which is centred on the 602) and loaded into memory. In at least some examples, an edge of the map graph 502 which is in closest proximity to the location 602 may be determined. Additionally or alternatively, a path of the map graph 502 which is in closest proximity to the location 602 may be determined (for example, a path which includes a determined closest edge). In the example shown in FIG. 6, for each of the locations 602 in the first trajectory 604 it may be determined that the first path 508a is the path of the map graph 502 which is in closest proximity to each of the locations 602.

In at least some examples, locations in the first trajectory time series 310 may be projected on to a closest determined edge or path in a map graph. For example, one or more locations 602 in a trajectory time series may be updated or modified to correspond to a closest location on a closest edge (and path) of the map graph 502. In at least some examples, for each location 602 in a first trajectory time series 310 it may be determined whether the location 602 intersects an edge (and path) of the map graph 502. If a location 602 does intersect an edge (and path) of the map graph 502 then the location 602 may be considered to be correctly placed with respect to the map graph 502. Consequently, the location 602 may not be modified in the first trajectory time series 310. If a location 602 does not intersect an edge (or path) of the map graph 502 then the location 602 may be modified in the first trajectory time series 310 such that it does intersect with an edge (and path) of the map graph 502. For example, a closest location on an edge (and path) of the map graph 502 may be determined and the location 602 in the first trajectory time series 310 may be updated to correspond to the closest location which does intersect an edge (and path) of the map graph 502. In this way, a first trajectory time series 310 may be updated or modified such that the object is assumed to have travelled along one or more edges and paths of the map graph 502 during the first trajectory 604.

The map location module 304 (or other suitable processing means) may be further configured to determine a direction of travel of the object along the first path 508a during the first trajectory 604. The direction of travel may, for example, be determined in dependence on the time order of locations 602 in the first trajectory time series 310. In the example of FIG. 6 it may be determined that the object is moving generally from left to right (as viewed in FIG. 6) along the first path 508a during the first trajectory 604. Put another way, it may be determined that the object is moving along the first path 508a during the first trajectory 604 in a direction towards the junction node 504b and away from the junction node 504a. As will be described, further below, knowledge of a direction of travel of an object along a path of a map graph 502 may be used to predict a future (trajectory) of the object. For example, it may be assumed that in a subsequent second trajectory, the object will continue to travel along the same path of the map graph and in the same direction as during the first trajectory 604 (at least until it reaches a junction node).

Returning again to the method 400 of FIG. 4 at the end of step 404 (which may be performed by the map location module 304), the information available comprises at least a first trajectory time series 310 and a first path 508a of a map graph 502 along which the object is travelling. The first path 508a may be denoted as *P₁,* such that the available information may be represented as (*x_{T}, y_{T}, v_{T}*), (*x_{T-1}*, *y*_{*T*-}*₁, v_{T-1}*), *...,* (*x_{T-n}, y_{T-n}, v_{T-n}*), *P₁.* As was explained above, the locations (*xₜ, yₜ*) in the time series may have been projected onto a closest edge (and path) of the map graph and may therefore include some adjustments relative to the first trajectory time series 310 received at step 402. In at least some examples, the first path *P₁* may be evaluated at time T (the latest time in the first first trajectory time series 310). That is, the first path *P₁* may comprise the path in closest proximity to the location of the object at the end of the first trajectory. The first path *P₁* may be supplemented with additional information such as a direction of travel of the object along the first path *P₁.* In some examples, the first path *P₁* may be associated with supplementary information provided as part of the map graph such as a number of lanes of a road represented by the first path *P₁* and/or whether the road is a one-way road or a bidirectional road.

At step 406 an acceleration of the object is predicted between a plurality of times during a second trajectory of the object. The prediction of acceleration at step 406 may be implemented by the acceleration prediction model 306 of the trajectory prediction system 302. As was explained above, a second trajectory comprises a predicted trajectory of the object which is subsequent to and continuing from the first trajectory. The acceleration of the object during the second trajectory is predicted in dependence on the first trajectory time series 310. The acceleration of the object during the second trajectory may be predicted between a plurality of times during the second trajectory. For example, the second trajectory may be represented by a second trajectory time series evaluated at *m* future time points *T+1, T+2,.... T+m.* The acceleration of the object may be predicted for time periods in between the times points, *T, T+1, T+2,.... T+m.* The predicted acceleration of the object may represented as *aᵢ*, where i is an index denoting time periods for which the acceleration of the object is predicted and where *i=1,2...m.* The time period denoted by the index *i* may correspond with the time period between *T+i-1* and *T+i.* For example, the time period denoted by the index *i=1* may correspond with the time period between *T* and *T+1,* the period denoted by the index *i=2* may correspond with the time period between *T+1* and *T+2,* the time period denoted by the index *i=3* may correspond with the time period between *T+2* and *T+3* and so on.

In at least some examples, the acceleration of the object between a plurality of times during a second trajectory of the object may be determined by implementing an acceleration prediction model 306. The acceleration prediction model 306 may be configured through training to predict an acceleration of an object for at least one time period during a future trajectory (e.g., second trajectory) based on model inputs representative of a past trajectory (e.g., first trajectory) of the object. The acceleration prediction model 306 may comprise a machine learning model. The acceleration prediction model 306 may comprise a model M given by equation (1) below, in which *Xₜ* comprises model inputs representative of the first (past) trajectory, p comprises model parameters (which, may be learnt through machine learning) and *âᵢ* comprises a set of predictions of acceleration for future time periods indexed by i. $M \left({X}_{t}, p\right) = {\hat{a}}_{i}$

The model M is configured to approximate a mapping between model inputs *Xₜ* and the predictions âᵢ. The model M may be trained based on a training data set comprising a set of model inputs *Xₜ* based on observations of first trajectories of objects and observed true accelerations *aᵢ* of objects during second trajectories subsequent to and continuing from the first trajectories. The model *M* may be trained by determining model parameters *p* which minimise a loss function 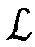 (*âᵢ, aᵢ*) representative of a difference between predicted *âᵢ* and observed accelerations *aᵢ* of an object.

Training data may be collected by observing (measuring) a plurality of object trajectories (e.g., vehicle trajectories). For example, one or more sensors may be arranged to measure properties of trajectories of one of more objects (such as vehicles). Measured trajectories may be split into corresponding first trajectories and second trajectories which continue from and are subsequent to a first trajectory. Model inputs *Xₜ* may be determined based on the measured first trajectories and observed accelerations aᵢ determined based on the measured second trajectories. Trajectories may be observed over a variety of different conditions, locations and way (e.g., road) types in order to obtain a representative training data set. In at least some examples, training data may be sampled from a larger collection of training data to obtain a balanced training dataset.

A trained acceleration prediction model 306 may be tested and/or validated by implementing the acceleration prediction model 306 in inference mode for a validation data set based on observed trajectories. A validation data set may have any of the properties described above with reference to a training data set and may be based on measured object trajectories. The validation data set may however be different to the training data set used to train the acceleration prediction model 306. A trained acceleration prediction model 306 may be implemented in inference mode by providing model inputs *Xₜ* representative of a first trajectory in the validation data set to the trained model M. The model M is then implemented based on the model inputs *Xₜ* and the model parameters p learnt through training to obtain a prediction of acceleration *âᵢ* during a second trajectory subsequent to and continuing from the first trajectory represented by the provided model inputs *Xₜ.* The predicted acceleration *âᵢ* output from the trained model M may then be compared to the corresponding observed acceleration aᵢ in the validation data set to evaluate performance of the trained model M. Such comparison may, for example, be performed for a plurality of entries in a validation data set.

Once trained and validated, an acceleration prediction model 306 M may be implemented in inference mode (for example, in step 406 of the method 400 of FIG. 4) in order to predict acceleration of a future (second trajectory) of an object, which has not yet undergone such a trajectory. For example, model inputs *Xₜ* representative of the received first trajectory time series 310 may be provided to the acceleration prediction model 306 M and predicted acceleration *âᵢ* of the object obtained from the acceleration prediction model 306.

The model inputs *Xₜ* may be any suitable inputs which represent one or more properties of a first trajectory. For example, model inputs *Xₜ* may comprise a first trajectory time series as described herein. In at least some examples, feature engineering may be performed to derive at least one engineered feature in dependence on a first trajectory time series. One or more features derived through feature engineering may form all or part of the model inputs *Xₜ.*

In some examples, one or more pre-processing steps may be performed. Pre-processing steps may, for example, include one or more of coordinate normalisation and/or detrending.

Coordinates such as latitude and longitude may be normalised into a three dimensional Cartesian coordinates *x, y, z*. Such normalisation may be used to create a uniform Cartesian coordinate system, reducing the impact of the earths's curvature and may enable consistent distance calculations by normalising coordinates to a unit sphere. Normalisation may be carried out according to equation (2) below in which ϕ is latitude and λ is longitude. $\begin{matrix}x = cos \left(ϕ\right) cos \left(λ\right) \\ y = cos \left(ϕ\right) sin \left(λ\right) \\ z = sin \left(ϕ\right)\end{matrix}$

Coordinates in a trajectory may be detrended such that they relate to positional differences relative to a common local reference point. For example, each geographic location in a trajectory time series may be transformed to a positional difference relative to a local reference point for that trajectory time series. The local reference point for that trajectory time series may comprise a starting point of the trajectory time series. Each location (*xₜ,yₜ*) in a trajectory time series may be transformed to a corresponding detrended location (Δ*xₜ,*Δ*yₜ*), calculated according to equation (3) below in which the local reference point for the trajectory has a location given by (*xᵣ*,*yᵣ*). $Δ {x}_{t} = \left|{x}_{i}-{x}_{r}\right| , Δ {y}_{t} = \left|{y}_{i}-{y}_{r}\right|$

In at least examples, the local reference point may be a starting point (*x_{T-n}, y_{T-n}*) of the trajectory time series. Detrending the trajectory time series relative to a local reference point serves to generate trajectory time series which do not depend on the geographic regions in which they occurred. Detrended trajectory time series instead depend on the local shape of the trajectories, such that different trajectories occurring in different geographic regions but having similar trajectory shapes will generate similar detrended trajectory time series. Accordingly, the training of a trajectory prediction model based on the detrended trajectory time series will learn features of the local trajectory shapes without dependence on the geographic region in which the trajectories occurred.

An engineered feature derived through feature engineering may, for example, include a timestamp index comprising an index associated with each location in a trajectory time series and ordered by time.

An engineered feature derived through feature engineering may, for example, include a turn angle feature representative of a turn angle of the object during a trajectory. A turn angle of an object during a trajectory may comprise an angular change in direction of motion of the object. A turn angle feature may be represented as a cosine and/or sine of a turn angle (e.g, in degrees or radians).

An engineered feature derived through feature engineering may, for example, include a progressive distance feature representative of a distance of the object from a start of a trajectory during the trajectory. A progressive distance may be calculated as a progressive Euclidean distance *dₗ*(*t*) according to equation (4) below, where *xₜ,* and *yₜ* may comprise any suitable coordinates such as latitude and longitude, or normalised and/or detrended coordinates as described above, and *l* is an integer defining the time point relative to which progressive distance is calculated. ${d}_{l} \left(t\right) = \sqrt{{\left({x}_{t}-{x}_{t - l}\right)}^{2} + {\left({y}_{t}-{y}_{t - l}\right)}^{2}}$

An engineered feature derived through feature engineering may, for example, include a dynamic standardisation feature. A dynamic standardisation may be applied to a time series (e.g., trajectory time series or other time series) *X(t)* using a window *k* where the dynamic standardisation feature is calculated according to equation (5) below. ${X}_{dynamic , k} \left(t\right) = X \left(t\right) - X \left(t-k\right)$

An engineered feature derived through feature engineering may, for example, include a speed ratio feature representative of a ratio of a speed of the object at a time during a trajectory to an average speed of the object during the trajectory. A speed ratio feature may, for example, be calculated according to equation (6) below in which *v(t)* is a speed of an object at a time *t* during a trajectory and *v̅* is an average (e.g., mean) speed of the object during the trajectory. $r \left(t\right) = \frac{v \left(t\right)}{\overline{v}}$

An engineered feature derived through feature engineering may, for example, include an acceleration feature representative of an acceleration of an object during a trajectory of the object. An acceleration feature may comprise a measure of total magnitude of acceleration during a trajectory. For example, an acceleration feature |*a*| may be calculated according to equation (7) below in which *aᵢ* is a time series of accelerations indexed by i. $\left|a\right| = \sqrt{{\sum }_{i = 1}^{n} {a}_{i}^{2}}$

An engineered feature derived through feature engineering may, for example, include an angular speed feature representative of an angular speed of the object during the first trajectory. An angular speed feature may comprise a measure of total magnitude of angular speed during a trajectory. For example, an angular speed feature |*ω*| may be calculated according to equation (8) below in which ωᵢ is a time series of angular velocity of an object indexed by i. $\left|ω\right| = \sqrt{{\sum }_{i = 1}^{n} {ω}_{i}^{2}}$

An engineered feature derived through feature engineering may, for example, include a direction feature representative of a direction of movement of an object during a trajectory of the object. For example, a direction feature *θₖ*(*t*) may be calculated according to equation (9) below in which *x*(*t*)*,* and *y*(*t*) may comprise any suitable coordinates such as latitude and longitude, or normalised and/or detrended coordinates as described above and *k* defines a time period over which the direction is evaluated. $\begin{matrix}{θ}_{k} \left(t\right) = arctan 2 \left(Δ{x}_{k}\left(t\right),Δ{y}_{k}\left(t\right)\right) \\ Δ {x}_{k} \left(t\right) = x \left(t\right) - x \left(t-k\right) \\ Δ {y}_{k} \left(t\right) = y \left(t\right) - y \left(t-k\right)\end{matrix}$

An engineered feature derived through feature engineering may, for example, include an angular change feature representative of a change of direction of an object during a trajectory of the object. For example, an angular change feature Δ*θₖ*(*t*) may be calculated according to equation (10) below in which *θ*(*t*) is an angle representing an direction of motion of the object at time *t* and *k* defines a time period over which the angular change is evaluated. $Δ {θ}_{k} \left(t\right) = arctan 2 \left(sin\left({θ}_{t}-{θ}_{t - k}\right),cos\left({θ}_{t}-{θ}_{t - k}\right)\right)$

An engineered feature derived through feature engineering may, for example, include a positional difference feature representative of a difference in position of an object at different times during a trajectory of the object. For example, positional difference features Δ*xₖ*(*t*) and/or Δ*yₖ*(*t*) may be calculated according to equation (11) below in which *x*(*t*)*,* and *y*(*t*) may comprise any suitable coordinates such as latitude and longitude, or normalised and/or detrended coordinates as described above and *k* defines a time period over which the positional difference is evaluated. $\begin{matrix}Δ {x}_{k} \left(t\right) = x \left(t\right) - x \left(t-k\right) \\ Δ {y}_{k} \left(t\right) = y \left(t\right) - y \left(t-k\right)\end{matrix}$

An engineered feature derived through feature engineering may, for example, include a lagged feature. A lag may be applied to a time series (e.g., trajectory time series or other time series) *X*(*t*) using a lag *k* where the lagged feature is calculated according to equation (12) below. ${X}_{lagged , k} \left(t\right) = X \left(t-k\right)$

Any one or any combination of the engineered features described above (or alternative engineered features) which are derived through feature engineering may form all of part of model inputs *Xₜ* to an acceleration prediction model 306. Engineered features may be used during training of an acceleration prediction model 306 (the feature engineering being applied to a training data set), validation of an acceleration prediction model 306 (the feature engineering being applied to a validation data set) and/or during inference to obtain acceleration predictions âᵢ for an unknown second trajectory (the feature engineering being applied to a measured first trajectory time series 310 on which trajectory prediction is to be based).

As was explained above, an acceleration prediction model 306 M may be trained using a training data set representative of observed object trajectories. A training data set may comprise model inputs *x^{train}* representative of measured first trajectories of objects and measured accelerations *a^{train}* of the same objects during second trajectories which are subsequent to and continue from the first trajectories represented by the model inputs *X^{train}.* A trained acceleration prediction model 306 M may be validated and/or tested using a validation data set. A validation data set may comprise model inputs *X^{val}* representative of measured first trajectories of objects and measured accelerations *a^{val}* of the same objects during second trajectories which are subsequent to and continue from the first trajectories represented by the model inputs *X^{val}.*

In at least some examples, the acceleration prediction model 306 may be configured to predict accelerations *âᵢ* for m time periods in a single implementation of the acceleration prediction model 306. For example, the acceleration prediction model 306 M may be provided with model inputs *Xₜ* and may be implemented to output *m* acceleration predictions *â*₁, *â*₂,...*â*ₘ corresponding to m future time periods.

In some examples, an acceleration prediction model 306 may be implemented a plurality of times to predict an acceleration of the object for a plurality of times during a second trajectory. For example, the acceleration prediction model 306 may be implemented m times, each implementation resulting in an acceleration prediction *aᵢ* for a different time period during the second trajectory. Implementations of an acceleration prediction model 306 after a first implementation to predict acceleration *â*₁ for a first time period may be performed using model inputs *Xₜ* which depend on one or more predictions output from one or more previous model implementations.

For example, a first implementation of an acceleration prediction model 306 M may comprise providing the acceleration prediction model 306 with model inputs *Xₜ* representative of a first trajectory of an object. The first implementation of the acceleration prediction model 306 M may result in the output of a predicted acceleration *â*₁ of the object for a first time period subsequent to the first trajectory. A second implementation of an acceleration prediction model 306 may then be performed. The second implementation of the acceleration prediction model 306 M may comprise providing the acceleration prediction model 306 with model inputs *Xₜ* representative of the first trajectory of the object and representative of the predicted acceleration *â*₁ (obtained from the first implementation) of the object for the first time period subsequent to the first trajectory. For example, the model inputs *Xₜ* used for the first implementation may be modified and/or supplemented based on the predicted acceleration *â*₁ (obtained from the first implementation) of the object for the first time period and the modified and/or supplemented model input *Xₜ* provided to the acceleration prediction model 306 for the second implementation. The second implementation of the acceleration prediction model 306 M may then result in the output of a predicted acceleration *â*₂ of the object for a second time period subsequent to the first trajectory (and subsequent to the first time period). One or more further implementations may be performed to obtain predictions for further subsequent time periods, where each implementation utilises model inputs representative of the first trajectory and all previous predictions obtained though previous iterations of the acceleration prediction model 306.

Such an iterative approach to implementation of an acceleration prediction model 306 for successive time periods (and utilising previous predictions output from previous model implementations) may be used in both training the acceleration prediction model 306 and in implementing the acceleration prediction model 306 in inference mode. Such an approach may provide correlated acceleration predictions *aᵢ* and improve prediction accuracy by utilising previous predictions. Such an approach may also allow training and implementation of a single acceleration prediction model 306 M to produce all outputs. For example, the first implementation of an acceleration prediction model 306 may comprise implementing the same acceleration prediction model 306 as in a second implementation of an acceleration prediction model 306. This reduces architectural complexity and computational cost by training and implementing a single acceleration prediction model 306.

In other examples, a plurality of acceleration prediction models 306 may be trained and implemented. For example, a first acceleration prediction model 306 may be trained and implemented to predict acceleration *â*₁ of the object for a first time period subsequent to the first trajectory, a second acceleration prediction model 306 may be trained and implemented to predict acceleration *â*₂ of the object for a second time period subsequent to the first trajectory and so on. In such examples, the second implementation of an acceleration prediction model 306 may comprise implementing a different acceleration prediction model 306 to the second implementation of an acceleration prediction model 306.

Any suitable form of machine learning model may be used for the acceleration prediction model 306. In at least some examples, the acceleration prediction model 306 may utilise gradient boosting. For example, the acceleration prediction model 306 may comprise the CatBoost [2], [3] machine learning model. CatBoost is a gradient boosting algorithm which has been found to provide robustness to over-fitting resulting from its learning scheme known as ordered gradient boosting, as well as providing fast implementation speeds in both training and inference modes and high prediction accuracy.

In at least some examples, acceleration may be predicted for approximately five (m=5) future time periods so as to produce output predictions *â*₁,*â*₂,*â*₃,*â*₄,*â*₅. However, in general any number of acceleration predictions *âᵢ* for any number of time periods during a second (future) trajectory may be made. For example, acceleration may be predicted for *m* future time periods so as to produce output predictions *â*₁,*â*₂,...*âₘ*.

In the examples, described above accelerations of an object are directly predicted using an acceleration prediction model 306. Such an approach, in which the acceleration is predicted, may allow the training and prediction to be performed independent of the magnitude of the speed of the object during the trajectory. This is been found to simplify the modelling approach and improve prediction accuracy. However, in other examples, a speed of the object may be directly predicted as opposed to its acceleration (e.g., a speed prediction model may be trained and implemented). In such examples, the speed of the object may be predicted at a plurality of times and thus the acceleration of the object between such times is still predicted indirectly. Predicting a speed of an object at different times during a second trajectory also therefore comprises predicting acceleration of the object between a plurality of times during the second trajectory of the object.

Returning again to the method 400 of FIG. 4, at step 408 it is determined whether the object is predicted to reach a junction node of the map graph during the second trajectory. For example, it may be determined, if the object travels along the first path of the map graph (previously determined at step 404) and with the predicted acceleration (determined at step 406) during the second trajectory, whether the object will reach a junction node during the second trajectory.

The method 400 may, for example, comprise predicting a distance of the object from a start of the second trajectory at each of the plurality of times *T+1, T+2,.... T+m* during the second trajectory. For example, the predicted accelerations *â*₁,*â*₂,...*âₘ* for m time periods may be used to determine distances travelled during each of the *m* time periods. As was explained above, the time period *m=1* for which a first acceleration prediction *â*₁ is obtained may correspond with the time period between times *T* and *T+1,* where *T* is the time at the end of the first trajectory. A speed *v_{T}* of the object at time T may be known (or determined from) the first trajectory time series 310. It may then be assumed that the object undergoes a constant acceleration of *â*₁ between times *T* and *T+1* such that a predicted speed of the object is known at all times between *T* and *T+1* and may be used to determine a predicted distance travelled between times *T* and *T+1* (e.g., by integration of the predicted speed). Corresponding determinations may be made for all time periods during the second trajectory to obtain predicted distances of the object from the start of the second trajectory (e.g., from the location of the object at time *T*).

Predicted distances at times during the second trajectory may be summed to determine a total distance from the start of the second trajectory (e.g., from the location of the object at time *T*) which the object is predicted to travel during the second trajectory. Put another way, a predicted furthest distance of the object from the start of the second trajectory during the second trajectory may be determined.

A distance may also be determined from the start of the second trajectory (equivalently the end of the first trajectory) to an end of the previously determined first path (the distance to the next junction node). The distance may be determined to an end of the first path in a direction of travel of the object during the first trajectory. For example, in the example, shown in FIG. 6 it is determined that the object is travelling along the first path 508a and towards the junction node 504b. A remaining distance from the end of the first trajectory 604 to the junction node 504b may be determined and taken as the distance from the start of the second trajectory to an end of the first path 508a.

The determined distance from the start of the second trajectory (equivalently the end of the first trajectory) to the end of the first path (equivalently the next junction node in the direction of travel of the object) may be compared to the predicted furthest distance of the object from the start of the second trajectory during the second trajectory (the predicted total distance travelled during the second trajectory). If the predicted furthest distance of the object from the start of the second trajectory during the second trajectory is greater than the determined distance from the start of the second trajectory to the end of the first path, then it is determined that the object is predicted to reach a junction node of the map graph during the second trajectory. If the predicted furthest distance of the object from the start of the second trajectory during the second trajectory is less than the determined distance from the start of the second trajectory to the end of the first path, then it is determined that the object is not predicted to reach a junction node of the map graph during the second trajectory.

If it is determined that the object is not predicted to reach a junction node of the map graph during the second trajectory at step 408 then the method proceeds to step 410. If it is determined that the object is not predicted to reach a junction node of the map graph during the second trajectory, the method proceeds to step 412.

At step 410 a second path of the map graph on which the second trajectory will continue beyond the junction node is predicted. The second path of the map graph on which the second trajectory will continue beyond the junction node is predicted in dependence on the first trajectory time series. The prediction made at step 410 may be implemented by the direction prediction model 308 of FIG. 3. The direction prediction model 308 may be configured through training to predict a future direction of motion of an object based on model inputs representative of a past trajectory of the object. The direction prediction model 308 may be implemented by providing model inputs representative of the first trajectory of the object to the direction prediction model. The direction prediction model 308 may comprise one or more machine learning models.

The direction prediction model 308 may be trained using a training data set based on a plurality of observed object trajectories. Similarly to the training of the acceleration prediction model 306 described above, the training data set may comprise model inputs based on observations of first trajectories of objects and observed true directions of objects during second trajectories subsequent to and continuing from the first trajectories. The direction prediction model 308 may be trained by determining model parameters which minimise a loss function representative of a difference between predicted and observed directions of an object during a second trajectory.

Training data may be collected by observing (measuring) a plurality of object trajectories (e.g., vehicle trajectories). For example, one or more sensors may be arranged to measure properties of trajectories of one of more objects (such as vehicles). Measured trajectories may be split into corresponding first trajectories and second trajectories which continue from and are subsequent to a first trajectory. Model inputs may be determined based on the measured first trajectories and observed directions determined based on the measured second trajectories. Trajectories may be observed over a variety of different conditions, locations and way (e.g., road) types in order to obtain a representative training data set. In at least some examples, training data may be sampled from a larger collection of training data to obtain a balanced training dataset.

A trained direction prediction model 308 may be tested and/or validated by implementing the direction prediction model 308 in inference mode for a validation data set based on observed trajectories. A validation data set may have any of the properties described above with reference to a training data set and may be based on measured object trajectories. The validation data set may however be different to the training data set used to train the direction prediction model 308. A trained direction prediction model 308 may be implemented in inference mode by providing model inputs representative of a first trajectory in the validation data set to the trained model . The model is then implemented based on the model inputs and the model parameters learnt through training to obtain a predicted direction of an object during a second trajectory subsequent to and continuing from the first trajectory represented by the provided model inputs. The predicted direction output from the trained model may then be compared to the corresponding observed direction in the validation data set to evaluate performance of the trained model. Such comparison may, for example, be performed for a plurality of entries in a validation data set.

Once trained and validated, a direction prediction model 308 may be implemented in inference mode (for example, in step 410 of the method 400 of FIG. 4) in order to predict a direction of a future (second trajectory) of an object, which has not yet undergone such a trajectory. For example, model inputs representative of the received first trajectory time series 310 may be provided to the direction prediction model 308 and a predicted direction of the object obtained from the direction prediction model 308.

The model inputs may be any suitable inputs which represent one or more properties of a first trajectory. For example, model inputs may comprise a first trajectory time series as described herein. Similarly to the acceleration prediction model 306 described above, one or more pre-processing and/or feature engineering processes may be performed in dependence on a first trajectory time series, in order to derive model inputs. Any of the pre-processing and/or feature engineering processes described above with reference to the acceleration prediction model 306 may be performed in order to produce model inputs for the direction prediction model 308.

The direction prediction model 308 may comprise a classifier configured to predict a future direction of motion of an object from a discrete number of candidate directions. For example, the candidate directions may comprise options such as left, right, straight on etc. The classifier may be configured to output a probability associated with each of the candidate directions. Restricting the prediction of future direction to a discrete number of candidate directions may significantly simplify the prediction process and replicates typical options at junction nodes at which there are only a discrete number of possible paths which an object arriving at the junction node can traverse. For example, in the example of FIG. 6 an object arriving at the junction node 504b having travelled along the first path 508a may continue along the second path 508b, the third path 508c or the fourth path 508d.

In some examples, different direction prediction models 308 may be trained and implemented for different junction nodes having different numbers of paths incident on them. For example, a first direction prediction model 308 may be trained and implemented for junction nodes having three paths incident on them, where the first direction prediction model 308 is configured to predict a future direction of motion of an object from two possible candidate directions (reflecting the two possible choices of direction faced by an object arriving at such a junction node). A second direction prediction model 308 may be trained and implemented for junction nodes having four paths incident on them, where the second direction prediction model 308 is configured to predict a future direction of motion of an object from three possible candidate directions (reflecting the three possible choices of direction faced by an object arriving at such a junction node). Similarly, one or more further direction prediction models 308 may be trained and implemented for junction nodes having more than four paths incident on them. When implemented in step 410, a suitable direction prediction model 308 may be chosen dependent on the number of paths incident on the junction node that the object is predicted to arrive at during the second trajectory.

In at least some examples, the direction prediction model 308 may comprise an ensemble of a plurality of base direction prediction models. Each base direction prediction model may be configured to predict a future direction of motion of an object based on model inputs representative of a past trajectory of the object. Each base direction prediction model may be trained and/or implemented using any of the features described above with reference to the training and implementation of a direction prediction model 308. For example, each base direction prediction model may be trained using a training dataset as described above (e.g., the same training data set may be used to independently train each base direction prediction model).

Different base direction prediction models comprise different machine learning models. In at least some examples, each base direction prediction model may comprise a classifier configured to predict a future direction of motion of an object from a discrete number of candidate directions. For example, each base direction prediction model may be configured to output a probability associated with each of a plurality of candidate directions. An output probability associated with a candidate direction represents a probability, based on model inputs representative of a first trajectory, that a second trajectory of the object will continue along the candidate direction.

Each base direction prediction model may be configured to produce corresponding predictions based on the same model inputs (and may be trained on the same training data set). However, diversity in the type of machine learning model used for the base direction prediction models may result in different base direction prediction model providing different outputs for the same set of inputs. This diversity of output may be harnessed by aggregating the outputs of a plurality of base direction prediction models to produce a single prediction output. Such an approach may mitigate any individual model weaknesses, capture a broader spectrum of contextual patterns and provide a more robust and nuanced predictive mechanism.

Each base direction prediction model may output a probability vector *Pₘ* containing probabilities associated with each of n candidate directions. The probability vector *Pₘ* may be given according to equation (13) below where the index m is used to denote different base direction prediction models and the index i is used to denote different candidate directions. ${P}_{m} = \left[{p}_{1},…{p}_{n}\right] , {\sum }_{i = 1}^{n} {p}_{i} = 1$

In at least some examples, the number of candidate directions (n) may, for example, comprise three (n=3) corresponding to right, left and straight on. In other examples, a different number of candidate directions may be used. As was described above, in some examples, different direction prediction models 308 may be used for different junction nodes having a different number of paths incident on them. For example, different base direction prediction models configured for different numbers of candidate directions may be used for different junction nodes having different numbers of paths incident on them.

Probability vectors output from different base direction prediction models may be stacked to form an input *X_{agg}* to an aggregation process, where *X_{agg}* is given by equation (14) below and M is the total number of base direction prediction models used. ${X}_{agg} = \left[\begin{matrix}{P}_{1} \\ ⋯ \\ {P}_{M}\end{matrix}\right]$

In at least some examples, approximately six base direction prediction models may be used (i.e., *M=6).* Merely to provide an illustrative example, the base direction prediction models may comprise one or more of a random forest classifier, a multi-layer perceptron, a light gradient boosting machine (LightGBM) classifier, a logistic regression model, an extra trees classifier, and an eXtreme Gradient Boosting (XGBoost) model. A random forest classifier comprises a decision tree-based model. A random forest classifier may capture complex non-linear relationships, excel at feature interaction discovery and/or provide feature importance metrics. A multi-layer perceptron comprises a form of neural network. A multi-layer perceptron may be capable of modeling intricate, high-dimensional patterns, making it effective for nuanced prediction tasks. A LightGBM classifier is an efficient gradient boosting framework which may be optimised for speed and may be particularly effective for use with large, sparse datasets. A logistic regression model comprises a linear model serving as a simple classifier. A logistic regression model may be especially effective for use with linearly separable datasets. An extra trees classifier is configured to build multiple randomised decision trees and aggregate their predictions for enhanced robustness and accuracy. The XGBoost model comprises a gradient boosting model. The XGBoost model offers scalability and good performance, especially with structured data.

The outputs of the base direction prediction models may be aggregated to produce a single prediction. For example, an aggregation process may receive the aggregation input *X_{agg}* and output aggregated probabilities associated with each of candidate directions. For example, the aggregation process may output an aggregated probability vector *P_{agg}* having a form corresponding with the probability vectors of equation (13).

In at least some examples, the aggregation process may comprise implementing a meta- model. A meta-model may comprise a machine learning model trained to combine predictions from a plurality of base direction prediction models. For example, in addition to training the base direction prediction models, a training data set may be used to train a meta-model to combine predictions output from the plurality of base direction prediction models. For example, each of the base direction prediction models may be trained (e.g., independently of each other but based on the same training data set) to produce direction prediction probability vectors *Pₘ* in response to model inputs. Each of the trained base direction prediction models may then be implemented in inference mode on the model inputs in the training data set to produce an output direction prediction vector *Pₘ* for each model input in the training data set. The output direction prediction vectors *Pₘ* for each model input in the training data set may be stacked to form aggregation inputs *X_{agg}* (as explained above with reference to equation (14)) for each model input in the training data set. A meta-model training data set may then be formed comprising the aggregation inputs *X_{agg}* for each model input in the training data set and the true observed directions in the training data set. A meta-model may then be trained (e.g., using machine learning) to determine model parameters which minimise a cost function representative of a difference between the probability vectors *Pₘ* generated by the meta-model (based on the aggregation inputs *X_{agg}* for each model input in the training data set) and the true observed directions in the training data set.

Any suitable machine learning model may be used for the meta-model. In at least some examples, the meta-model may comprise the XGBoost model. In other examples, different machine learning models may be used to implement the meta-model.

When run in inference mode (e.g., during step 410 of the method 400 of FIG. 4) a final direction prediction may be obtained by determining the direction (from the candidate directions) with the highest associated probability output by the meta-model. For example, the highest value in a probability vector output by the meta-model may be determined and a direction associated with the highest value selected as the output direction prediction.

The use of an ensemble of a plurality of base direction prediction models as described above may advantageously ensure that the direction prediction model 308 can adapt to various types of map graphs and trajectories whilst maintaining high prediction accuracy. For example, different base direction prediction models may perform better when faced with different types of prediction tasks and/or sections of map graph (e.g., different road layouts, infrastructures etc.). Using a plurality of base direction prediction models and combining their outputs in an ensemble modelling approach may ensure that the different strengths and weaknesses of different base direction prediction models are utilised to generate accurate predictions across a range of different scenarios and trajectory and location type.

An output direction prediction may be used to determine a path of the map graph which is most closely aligned with the direction prediction. For example, in the example of FIG. 6 an object approaching the junction node 504b having travelled along the first path 508a may continue its trajectory along the second path 508b, the third path 508c or the fourth path 508d. In a scenario in which a direction prediction model 308 produces an output indicative of turning left, it may be determined that the second path 508b is most closely aligned with the direction prediction. It may therefore be predicted that the object will continue its trajectory along the second path 508b. In a scenario in which a direction prediction model 308 produces an output indicative of turning right, it may be determined that the third path 508c is most closely aligned with the direction prediction. It may therefore be predicted that the object will continue its trajectory along the third path 508c. In a scenario in which a direction prediction model 308 produces an output indicative of continuing straight ahead, it may be determined that the second fourth path 508d is most closely aligned with the direction prediction. It may therefore be predicted that the object will continue its trajectory along the fourth path 508d.

Returning again to the method 400 of FIG. 4 at step 412 a second trajectory time series 312 is determined. The second trajectory time series 312 comprises a time series of geographic locations representing predicted geographic positions of the object during the second trajectory of the object. The second trajectory time series 312 is determined in dependence on at least the predicted acceleration of the object during the second trajectory. When the object is predicted to reach a junction node during the second trajectory, the second trajectory time series is determined in further dependence on the predicted second path of the map graph on which the object is predicted to continue its trajectory.

If the object is not predicted to reach a junction node during the second trajectory then the second trajectory time series 312 comprises geographic locations on the first path of the map graph. For example, the second trajectory time series 312 may comprise locations on the first path which the object is predicted to reach if it undergoes the accelerations predicted at step 406 and continues to travel along the first path in the same direction in which it travelled during the first trajectory. Since the predicted accelerations are used to determine that the object is not predicted to reach a junction node during the second trajectory, the predicted accelerations will not project the object beyond an end of the first path during the second trajectory and the second trajectory time series may only comprise locations on the first path.

If the object is predicted to reach a junction node during the second trajectory then the second trajectory time series 312 comprises locations on one or both of the first path and the second path of the map graph. For example, the second trajectory time series 312 may comprise locations on the first path which the object is predicted to reach if it undergoes the accelerations predicted at step 406 and continues to travel along the first path in the same direction in which it travelled during the fist trajectory. Since the predicted accelerations are used to determine that the object is predicted to reach a junction node during the second trajectory, the predicted accelerations will also project the object past a junction node at the end of the first path. The second trajectory time series 312 may therefore comprise locations on the second path which the object is predicted to reach if it undergoes the accelerations predicted at step 406 and travels along the second path and away from the junction node at the end of the first path. In some scenarios, the end of the first trajectory (and the start of the second trajectory) may be in close proximity to a junction node. In such scenarios it is possible that the first location in the second trajectory (beyond the end of the first trajectory) may be at or beyond the junction node that the object is predicted to reach. It is therefore possible that the second trajectory time series 312 may not include any locations on the first path but will comprise locations on the second path.

As explained above, the predicted geographic positions may comprise positions which the object is predicted to reach according to the acceleration predictions produced at step 406. In particular, an assumption may be applied that the object will continue its trajectory along the first path (and in the direction observed during the first trajectory) and will undergo the accelerations predicted at step 406. If it is determined that the object will reach a junction node during the second trajectory (i.e., that the determination made at step 408 is "yes") then a further assumption may be applied that the object will continue is trajectory along the second path predicted at step 410 and will continue to undergo the accelerations predicted at step 406 also along the second path.

In at least some examples, if the object is predicted to reach a junction node during the second trajectory then a further determination may be made as to whether the object is predicted to reach an end of the second path (i.e., to reach a second junction node) during the second trajectory. For example, a further step corresponding to step 408 may be performed in order to determine whether the object is predicted to reach an end of the second path. This determination may be made in a corresponding way to that described above with reference to step 408. For example, the accelerations predicted at step 406 may be used to determine a furthest distance from the start of the second trajectory (equivalently the end of the first trajectory) which the object is predicted to travel during the second trajectory. The determined furthest distance may be compared to total distance from the start of the second trajectory (equivalently the end of the first trajectory) to the end of the second path to determine if the object is predicted to reach the end of the second path (a second junction node) during the second trajectory.

If it is determined that the object is not predicted to reach the end of the second path during the second trajectory, then the method may continue to step 412 as described above such that a second trajectory time series 312 is determined by projecting the object along the first and second paths using the predicted accelerations.

If it is determined that the object is predicted to reach the end of the second path during the second trajectory, then a prediction of a third path on which the second trajectory beyond the second path may be made. For example, a further step corresponding to step 410 may be performed, to predict a third path. Any of the steps of features described above with reference to step 410 may be performed to predict the third path. For example, one or more direction prediction models may be implemented to predict a direction which the object will travel in beyond the second path (beyond a junction node at the end of the second path).

These steps of determining whether the object is predicted to reach an end of the last predicted path and if it is, determine a further path which it is predicted to travel on may be repeated as many times as needed until a path is found which the object is not predicted reach the end of. If the object is predicted to reach one or more further paths beyond the second path during the second trajectory then these one or more further paths may be accounted for when determining the second trajectory time series 312. For example, the object may be projected along the one or more further paths using the predicted accelerations such that the second trajectory time series 312 further includes locations on the one or more further paths.

Systems and methods have been described above with reference to FIG. 3 - FIG. 6 in which a second (future) trajectory of an object is predicted based on a first (past) trajectory. In particular, movement of the object is assumed to be constrained to one or more paths of a map graph. This approach significantly simplifies the prediction of the trajectory of the object and may allow simplified and less-computational expensive modeling approaches to be used. In particular, the future acceleration of the object is predicted independently of its predicted direction of travel (its past direction of travel may be included in inputs to the acceleration prediction) such that a single time dependent variable may be predicted for times during the second trajectory. Direction prediction may be performed when the object is predicted to reach a junction node in the map graph. The direction prediction may be performed independently of the acceleration prediction resulting in a simplified modelling process. Furthermore, since a map graph only includes a discrete number of possible paths to travel on at each junction node, the direction prediction may be constrained to predicting one of a discrete number of candidate directions. This simplifies and streamlines the modelling of a future direction of the object may, for example, allow the modelling to be reduced to a classification task.

The methods and systems described herein may provide a particularly accurate and computationally efficient way in which to predict future trajectories. In particular, this approach may allow for real-time predictions of object trajectories. For example, a future trajectory of an object may be predicted in advance of the object undergoing the trajectory and using measurements of a trajectory of the object immediately before the future trajectory is predicted. Additionally or alternatively, the computational efficiency of the prediction methods may allow for its implementation on resource constrained devices. For example, edge devices such as in-vehicle computer systems, and/or mobile devices (e.g., mobile phones) may implement the methods described herein.

Unlike some prior art methods that depend on extensive sensor networks or large historical datasets, the systems and methods described herein may utilise only relatively few and simple inputs. For example, the methods described herein may operate with a limited set of inputs such as geographical coordinates of a first object trajectory, object velocity during the first trajectory and a local map-graph. By relying on such a compact dataset, the systems and methods are well-suited for widespread use providing a scalable and practical solution for modern intelligent transportation systems. The utilisation of a simple combination of inputs (e.g., object locations and/or speeds during a trajectory and map graph data) may significantly improve prediction accuracy without requiring specialist sensors (such as camera based imaging systems, radar, lidar etc.). This may allow for real-time forecasting remains even in unconnected environments. For example, a trajectory prediction system 302 as described herein need not necessarily be connected to a wide area network such as the internet. For example, a map graph may be stored locally in memory and a first trajectory time series 310 may be generated and received locally (e.g., using an in-vehicle GPS sensor). The use of a map graph with which to align object trajectories may reduce localization errors, and/or ensuring that predictions adhere to realistic physical constraints.

This use of acceleration prediction as described herein to produce trajectory predictions may allow for the generation of more precise trajectory predictions, capturing a variety of different object movement. This approach may significantly improves on traditional motion models, which often oversimplify object movement.

As was described above, a trajectory prediction system 302 may dynamically load only the necessary sections of a larger map graph. For example, a local section of a map graph may be loaded into memory for further processing and trajectory prediction. This may reduce computational overhead.

The methods and systems described herein may be computationally efficient enough for deployment on edge devices, such as in-vehicle or smartphones systems, while remaining robust enough to handle large-scale forecasting (for example, for centralised traffic management systems). Additionally, the system's graph-based abstraction ensures adaptability across various path (e.g., road) layouts and networks. Unlike methods that require extensive re-training for different locations, the methods described herein may adapt to new environments, different to those on which training of models is based, making them highly versatile. The systems and methods described herein may utilise universally available data such as GPS data and map graphs. This allows functionality across a wide range of objects such as vehicles, including those without built-in connectivity, and even through data collected from smartphones. This broad applicability makes it a highly practical solution. The methods and systems described herein may be applicable in several fields such as autonomous driving, smart cities, and intelligent transportation systems.

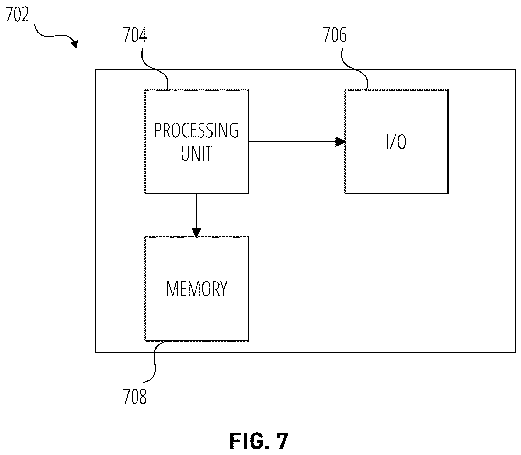

Various methods have been described herein in which some of the method steps may be implemented on any suitable electronic device (such as a computing device) and/or combination of electronic devices (e.g. computing devices). FIG. 7 is a schematic illustration of an example electronic device 702 which may be used to implement all or part of any method described herein. For example, one or more electronic devices 702 702 of the type shown in FIG. 7 and as described below may be used to implement all or part of a method of predicting an object trajectory as described herein. For example, one or more electronic devices 702 of the type shown in FIG. 7 and as described below may be used to implement all or part of a method 400 as described above with reference to FIG. 4. A trajectory prediction system 302 as described above with reference to FIG. 3 may comprise one or more electronic devices 702 of the type shown in FIG. 7 and as described below.

The electronic device 702 may comprise a computing device. The electronic device 702 may include at least one processing unit 704, memory 708 and an input/output interface 706 (I/O). The processing unit 704 may include any suitable processor and/or combination of processors. For example, the processing unit 704 may include one or more of a Central Processing Unit (CPU) and a Graphical Processing Unit (GPU). The memory 708 may include volatile memory and/or non-volatile/persistent memory. The memory 708 may, for example, be used to store data such as an operating system, instructions to be executed by the processing unit (e.g. in the form of software to be executed by the processing unit), configuration information related to the electronic device 702, and/or a map graph as described herein. In some examples, the memory 708 may be used to store instructions for executing any of the methods disclosed herein.

At least the processing unit 704 is connected to the input/output interface 706. The input/output interface 706 may facilitate communication with one or more other devices. For example, the input/output interface 706 may be operable to transmit and/or receive communications to/from other devices in a network. The input/output interface 706 may, for example, comprise one or more antennas to facilitate wireless communication with one or more other devices and/or wired interfaces to facilitate wired communication with one or more other devices.

Optionally, the electronic device 702 may further include a display (not shown). The display may comprise any suitable electronic display such as a touch sensitive display. The display may be connected to at least the processing unit 704. The processing unit 704 may generate display signals which are sent to the display in order to cause the display information.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. In particular, any dependent claims may be combined with any of the independent claims and any of the other dependent claims.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

### References

[1] URL: https://www.openstreetmap.org
[2] URL: https://catboost.ai/
[3] Liudmila Prokhorenkova, Gleb Gusev, Aleksandr Vorobev, Anna Veronika Dorogush, Andrey Gulin, *"CatBoost: unbiased boosting with categorical features",* Advances in Neural Information Processing Systems 31 (NeurIPS 2018)

## Claims

1. A computer implemented method of predicting a trajectory of an object, the method comprising:
receiving a first trajectory time series comprising a time series of geographic locations representing the geographic position of an object during a first trajectory of the object;
determining a first path of a map graph which is in closest proximity to at least one geographic location in the first trajectory time series, wherein the map graph comprises a plurality of paths extending between junction nodes on which at least three paths are incident;
predicting, in dependence on the first trajectory time series, an acceleration of the object between a plurality of times during a second trajectory of the object, wherein the second trajectory comprises a predicted trajectory of the object subsequent to and continuing from the first trajectory;
determining, if the object travels along the first path of the map graph and with the predicted acceleration of the object during the second trajectory, whether the object is predicted to reach a junction node of the map graph during the second trajectory;
if the object is predicted to reach a junction node during the second trajectory, predicting, in dependence on the first trajectory time series, a second path of the map graph on which the second trajectory will continue beyond the junction node; and
determining a second trajectory time series comprising a time series of geographic locations representing predicted geographic positions of the object during the second trajectory of the object, wherein the second trajectory time series is determined in dependence on the predicted acceleration of the object during the second trajectory and comprises:
geographic locations on the first path of the map graph if the object is not predicted to reach a junction node during the second trajectory; and
geographic locations on one or both of the first path and the second path of the map graph, if the object is predicted to reach a junction node during the second trajectory.

2. The computer implemented method of claim 1, wherein the method comprises determining, in dependence on the first trajectory time series and the first path of the map graph a direction of travel of the object along the first path during the first trajectory.

3. The computer implemented method of claim 1 or 2, wherein the method comprises:
predicting a distance of the object from a start of the second trajectory at each of the plurality of times during the second trajectory; and
determining a geographic location on the first path or the second path for each of the predicted distances from the start of the second trajectory.

4. The computer implemented method of any one of claims 1 to 3, wherein the method comprises:
determining, for each geographic location in the trajectory time series, a closest path of the map graph which is in closest proximity to the geographic location in the trajectory time series; and
projecting each geographic location in the trajectory time series onto a position on the determined closest path of the map graph.

5. The computer implemented method of any one of claims 1 to 4, wherein predicting the acceleration of the object between a plurality of times during the second trajectory of the object comprises:
implementing an acceleration prediction model, wherein the acceleration prediction model is configured through training to predict an acceleration of an object for at least one time period during a future trajectory of the object based on model inputs representative of a past trajectory of the object, wherein the future trajectory comprises a predicted trajectory of the object subsequent to and continuing from the past trajectory of the object, and wherein implementing the acceleration prediction model comprises providing model inputs representative of the first trajectory of the object to the acceleration prediction model.

6. The computer implemented method of claim 5, wherein
the implementing an acceleration prediction model comprises implementing an acceleration prediction model a plurality of times to predict an acceleration of the object for a plurality of times during the second trajectory;
wherein optionally, implementing an acceleration prediction model a plurality of times comprises:
a first implementation of an acceleration prediction model comprising providing model inputs representative of the first trajectory of the object to the acceleration prediction model and obtaining a prediction of an acceleration of the object at a first time during the second trajectory; and
a second implementation of an acceleration prediction model comprising providing model inputs representative of the first trajectory of the object and a model input representative of the obtained prediction of the acceleration of the object at the first time during the second the acceleration prediction model, and obtaining a prediction of an acceleration of the object at a second time during the second trajectory.

7. The computer implemented method of any one of claims 5 to 6, wherein
predicting the acceleration of the object between a plurality of times during the second trajectory of the object comprises performing feature engineering to derive at least one engineered feature in dependence on the first trajectory time series and providing the at least one engineered feature as a model input to the acceleration prediction model; and
wherein optionally, the at least one engineered feature comprises at least one of: a turn angle feature representative of a turn angle of the object during the first trajectory, a progressive distance feature representative of a distance of the object from a start of the first trajectory during the first trajectory, a speed ratio feature representative of a ratio of a speed of the object at a time during the first trajectory to an average speed of the object during the first trajectory, an acceleration feature representative of an acceleration of the object during the first trajectory, an angular speed feature representative of an angular speed of the object during the first trajectory, a direction feature representative of a direction of movement of the object during the first trajectory, an angular change feature representative of a change of direction of the object during the first trajectory, a positional difference feature representative of a difference in position of the object at different times during the first trajectory.

8. The computer implemented method of any one of claims 1 to 7, wherein determining whether the object is predicted to reach a junction node of the map graph during the second trajectory comprises:
determining, in dependence on the predicted acceleration of the object during the second trajectory, a predicted furthest distance of the object from a start of the second trajectory during the second trajectory;
determining a distance from the start of the second trajectory to an end of the first path; and
determining whether the predicted furthest distance from the start of the second trajectory is greater than the determined distance from the start of the second trajectory to the end of the first path.

9. The computer implemented method of any one of claims 1 to 8, wherein
predicting a second path of the map graph on which the second trajectory will continue beyond the first path comprises implementing a direction prediction model configured through training to predict a future direction of motion of an object based on model inputs representative of a past trajectory of the object and wherein implementing the direction prediction model comprises providing model inputs representative of the first trajectory of the object to the direction prediction mode;
wherein optionally, the direction prediction model comprises a classifier configured to predict a future direction of motion of an object from a discrete number of candidate directions.

10. The computer implemented method of claim 9, wherein the direction prediction model comprises an ensemble of a plurality of base direction prediction models each configured to predict a future direction of motion of an object based on model inputs representative of a past trajectory of the object and wherein implementing the direction prediction model comprises:
providing model inputs representative of the first trajectory of the object to each of the base direction prediction models to obtain a plurality of direction predictions of a future direction of motion of the object; and
determining a future direction of motion of the object based on the plurality of direction predictions.

11. The computer implemented method of claim 10, wherein the plurality of direction predictions obtained from the base direction prediction models each comprise a plurality of probabilities associated with a plurality of candidate directions.

12. The computer implemented method of any one of claims 9 to 10, wherein the predicting a second path of the map graph on which the second trajectory will continue beyond the first path comprises determining a path of the map graph which is most closely aligned with a future direction of motion of the object obtained from the direction prediction model.

13. The computer implemented method of any one of claims 9 to 12, wherein
the predicting a second path of the map graph on which the second trajectory will continue beyond the junction node comprises performing feature engineering to derive at least one engineered feature in dependence on the first trajectory time series and providing the at least one engineered feature as a model input to the direction prediction model; and
wherein optionally the at least one engineered feature comprises at least one of: a speed feature representative of a speed of the object during the first trajectory, a turn angle feature representative of a turn angle of the object during the first trajectory, and a positional difference feature representative of a difference in position of the object at different times during the first trajectory.

14. A computer readable medium storing instructions, which when executed, cause a method according to any one of claims 1 to 13 to be implemented.

15. A trajectory prediction system configured to:
receive a first trajectory time series comprising a time series of geographic locations representing the geographic position of an object during a first trajectory of the object;
determine a first path of a map graph which is in closest proximity to at least one geographic location in the first trajectory time series, wherein the map graph comprises a plurality of paths extending between junction nodes on which at least three paths are incident;
predict, in dependence on the first trajectory time series, an acceleration of the object between a plurality of times during a second trajectory of the object, wherein the second trajectory comprises a predicted trajectory of the object subsequent to and continuing from the first trajectory;
determine, if the object travels along the first path of the map graph and with the predicted acceleration of the object during the second trajectory, whether the object is predicted to reach a junction node of the map graph during the second trajectory;
if the object is predicted to reach a junction node during the second trajectory, predict, in dependence on the first trajectory time series, a second path of the map graph on which the second trajectory will continue beyond the junction node; and
determine a second trajectory time series comprising a time series of geographic locations representing predicted geographic positions of the object during the second trajectory of the object, wherein the second trajectory time series is determined in dependence on the predicted acceleration of the object during the second trajectory and comprises:
geographic locations on the first path of the map graph if the object is not predicted to reach a junction node during the second trajectory; and
geographic locations on one or both of the first path and the second path of the map graph, if the object is predicted to reach a junction node during the second trajectory.
